(19)

Europäisches Patentamt

European Patent Office

Office européen des brevets

(11) **EP 4 506 772 A1**

(12) **EUROPEAN PATENT APPLICATION**
published in accordance with Art. 153(4) EPC

(43) Date of publication:
**12.02.2025 Bulletin 2025/07**

(21) Application number: **23779350.0**

(22) Date of filing: **08.03.2023**

(51) International Patent Classification (IPC):
**G05D 3/12** *(2006.01)*

(52) Cooperative Patent Classification (CPC):
**G05D 3/12**

(86) International application number:
**PCT/JP2023/008836**

(87) International publication number:
**WO 2023/189323 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.04.2022 JP 2022061535**

(71) Applicant: **OMRON Corporation
Kyoto 600-8530 (JP)**

(72) Inventor: **NISHIMURA, Tomohiro
Kyoto-shi, Kyoto 600-8530 (JP)**

(74) Representative: **Mewburn Ellis LLP
Aurora Building
Counterslip
Bristol BS1 6BX (GB)**

(54) **CONTROL DEVICE, CONTROL SYSTEM, AND CONTROL METHOD**

(57)     A control device that controls an actuator includes a storage that obtains a new distance command value at first timing indicated by a first clock and stores the distance command value as a latest value and stores an immediately preceding latest value as a previous value, a first calculator that calculates a distance inclination based on the latest value and the previous value of the distance command value and the number of second clocks within one cycle of the first clock, a second calculator that calculates a distance extrapolated value by successively adding the distance inclination to the previous value of the distance command value at second timing indicated by the second clock, a command generator that outputs a command corresponding to a target distance when the distance extrapolated value reaches the target distance, and a clock controller that stops output of the second clock until a next cycle of the first clock comes when the number of second clocks generated within one cycle of the first clock reaches a predetermined setting value.

FIG.1

## Description

TECHNICAL FIELD

The present invention relates to a control device that controls an actuator, a control system including the control device, and a method of controlling an actuator.

BACKGROUND ART

Laser processing has conventionally been performed with the use of a processing program using a control code. For example, Japanese Patent Laying-Open No. 02-063692 (PTL 1) discloses a technique to control output from a laser oscillator, a moving speed of the laser oscillator, or the like with a processing condition being defined as a parameter.

CITATION LIST

PATENT LITERATURE

PTL 1: Japanese Patent Laying-Open No. 02-063692

SUMMARY OF INVENTION

TECHNICAL PROBLEM

The present invention provides a control device and the like capable of more precise control.

SOLUTION TO PROBLEM

According to one example of the present invention, a control device for controlling an actuator is provided. The control device includes a storage configured to obtain a new distance command value at first timing indicated by a first clock and store the distance command value as a latest value and store an immediately preceding latest value as a previous value, a second clock generator configured to generate a second clock, a first calculator configured to calculate a distance inclination based on the latest value and the previous value of the distance command value and the number of second clocks within one cycle of the first clock, a second calculator configured to calculate a distance extrapolated value by successively adding the distance inclination to the previous value of the distance command value at second timing indicated by the second clock, a first command generator configured to output a first command corresponding to a target distance when the distance extrapolated value reaches the target distance, and a clock controller configured to stop output of the second clock until a next cycle of the first clock comes when the number of second clocks generated within one cycle of the first clock reaches a predetermined setting value.

According to this configuration, by successively calculating the distance extrapolated value at second timing indicated by the second clock, determination as to reach to the target distance can more precisely be made and the number of second clocks generated within one cycle of the first clock is restricted to the setting value. Therefore, even when jitter is caused in the first clock, influence thereby on calculation of the distance extrapolated value can be suppressed.

The control device may further include a counter configured to count the number of second clocks generated within one cycle of the first clock. According to this configuration, since the number of second clocks is counted, the distance extrapolated value can appropriately be calculated depending on a situation.

The number of second clocks generated within one cycle of the first clock may be a predetermined fixed value. According to this configuration, since the number of second clocks is set to the predetermined fixed value, operation can more readily be verified.

A cycle of the first clock may be set to an integral multiple of a cycle of the second clock. According to this configuration, the distance extrapolated value can be calculated at even timing within the cycle of the first clock.

The clock controller may start generation of the second clock at third timing indicated by the first clock. According to this configuration, even when the cycle of the first clock becomes longer due to jitter, generation of the second clock can start at predetermined timing in a next cycle.

The control device may further include a second command generator configured to generate a second command for designation of a position in accordance with a designated trace. According to this configuration, a position of the actuator or the like can be controlled in accordance with the designated trace.

The first command generator may be configured to output an on or off instruction as a command. According to this configuration, on or off of the actuator can be controlled at timing of reach to the target distance.

The control device may be configured to provide a user interface for accepting setting of a cycle of the first clock and a cycle of the second clock. According to this configuration, a user can set the cycle of the first clock and the cycle of the second clock in consideration of resistance against jitter and precision in control.

A control system according to another example of the present invention includes an actuator and a control device configured to control the actuator. The control device includes a storage configured to obtain a new distance command value at first timing indicated by a first clock and store the distance command value as a latest value and store an immediately preceding latest value as a previous value, a second clock generator configured to generate a second clock, a first calculator configured to calculate a distance inclination based on the latest value and the previous value of the distance command value and the number of second clocks within one cycle of the first clock, a second calculator configured to calculate a distance extrapolated value by successively adding the distance inclination to the previous value of the distance command value at second timing indicated by the second clock, a command generator configured to output a command corresponding to a target distance when the distance extrapolated value reaches the target distance, and a clock controller configured to stop output of the second clock until a next cycle of the first clock comes when the number of second clocks generated within one cycle of the first clock reaches a predetermined setting value.

According to yet another example of the present invention, a method of controlling an actuator is provided. The method includes obtaining a new distance command value at first timing indicated by a first clock and storing the distance command value as a latest value and storing an immediately preceding latest value as a previous value, calculating a distance inclination based on the latest value and the previous value of the distance command value and the number of second clocks within one cycle of the first clock, calculating a distance extrapolated value by successively adding the distance inclination to the previous value of the distance command value at second timing indicated by the second clock, outputting a command corresponding to a target distance when the distance extrapolated value reaches the target distance, and stopping output of the second clock until a next cycle of the first clock comes when the number of second clocks generated within one cycle of the first clock reaches a predetermined setting value.

ADVANTAGEOUS EFFECTS OF INVENTION

According to the present invention, a control device and the like capable of more precise control can be realized.

BRIEF DESCRIPTION OF DRAWINGS

Fig. 1 is a schematic diagram showing an exemplary configuration of a control system according to the present embodiment.
Fig. 2 is a schematic diagram showing an exemplary main hardware configuration of the control system according to the present embodiment.
Fig. 3 is a schematic diagram showing an exemplary functional configuration of a main control unit of the control system according to the present embodiment.
Fig. 4 is a schematic diagram showing an exemplary functional configuration of a laser control unit of the control system according to the present embodiment.
Fig. 5 is a diagram for illustrating calculation of a distance inclination and on/off control of laser in the control system according to the present embodiment.
Fig. 6 is a time chart showing exemplary operation in the control system according to the present embodiment.
Fig. 7 is a diagram for illustrating count of an extrapolation clock count in the control system according to the present embodiment.
Fig. 8 is a time chart showing exemplary operation when a cycle of a synchronization clock becomes shorter in the control system according to the present embodiment.
Fig. 9 is a time chart showing exemplary operation when the cycle of the synchronization clock becomes longer in the control system according to the present embodiment.
Fig. 10 is a flowchart showing a processing procedure in main processing performed by the laser control unit of the control system according to the present embodiment.
Fig. 11 is a flowchart showing a processing procedure in processing for counting the extrapolation clock count performed by the laser control unit of the control system according to the present embodiment.
Fig. 12 is a schematic diagram showing an exemplary user interface screen shown on an operation display device of the control system according to the present embodiment.

DESCRIPTION OF EMBODIMENTS

An embodiment of the present invention will be described in detail with reference to the drawings. The same or corresponding elements in the drawings have the same reference characters allotted and description thereof will not be repeated.

<A. Exemplary Application>

An exemplary scene to which the present invention is applied will initially be described.

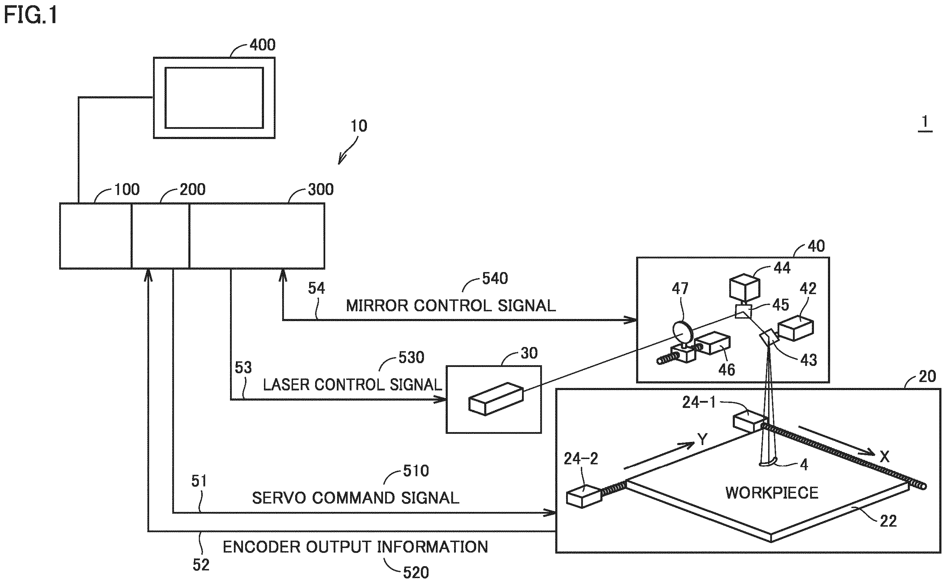

Fig. 1 is a schematic diagram showing an exemplary configuration of a control system 1 according to the present embodiment. Though Fig. 1 shows an example of a laser processing system as a typical example, an application to which the present invention is applied is not limited to the laser processing system and the present invention is applicable to a system including any actuator.

Control system 1 performs laser processing such as drilling, cutting, or marking on a workpiece 4 arranged on an XY stage 20. More specifically, control system 1 includes a control device 10, XY stage 20, laser 30, and a galvano mirror 40. XY stage 20, laser 30, and galvano mirror 40 are exemplary actuators controlled by control device 10.

In laser processing onto workpiece 4, adjustment of a position of the workpiece by XY stage 20 and adjustment by galvano mirror 40, of a position of irradiation with laser beams generated by laser 30 are combined. Adjustment of the position of workpiece 4 by XY stage 20 is relatively large in amount of displacement and relatively long in response time. In contrast, adjustment of the position of irradiation by galvano mirror 40 is relatively small in amount of displacement and relatively short in response time.

Control device 10 includes a main control unit 100, a stage control unit 200, and a laser control unit 300.

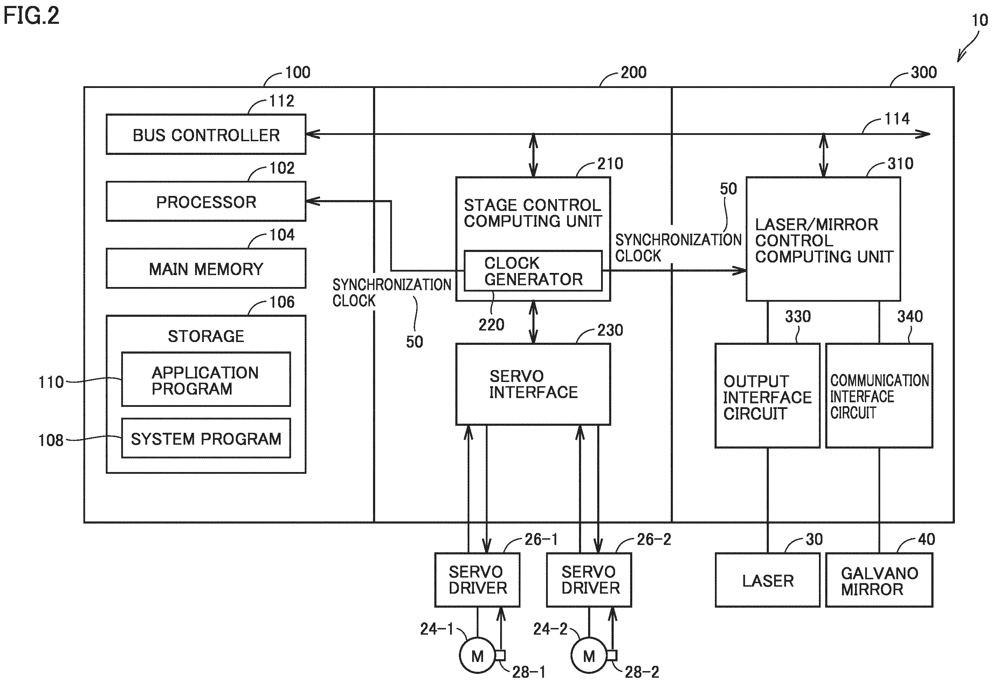

Main control unit 100 corresponds to a computing unit that executes an application program 110 (see Fig. 2). Application program 110 is freely created in accordance with a mechanism and workpiece 4 to be controlled. A result of execution obtained by execution of application program 110 by main control unit 100 is used for generation of a control signal in stage control unit 200 and laser control unit 300.

An operation display device 400 configured to output a command to control device 10 and to output a result of computation in control device 10 in response to an operation by a user may be connected to control device 10.

XY stage 20 includes a plate 22 where workpiece 4 is arranged and a servo motor 24-1 and a servo motor 24-2 (which may also collectively be referred to as "servo motor 24" below) configured to drive plate 22. In the example shown in Fig. 1, servo motor 24-1 displaces plate 22 in an X-axis direction and servo motor 24-2 displaces plate 22 in a Y-axis direction.

Servo motor 24 is controlled by control device 10. More specifically, stage control unit 200 outputs a servo command signal 510 through a control line 51 to servo drivers 26-1 and 26-2 (see Fig. 2) (which may also collectively be referred to as a "servo driver 26" below) that drive respective servo motors 24-1 and 24-2. Stage control unit 200 obtains encoder output information 520 through a control line 52 from encoders 28-1 and 28-2 (which may also collectively be referred to as an "encoder 28" below) connected to respective servo drivers 26-1 and 26-2.

Laser control unit 300 is connected to laser 30 through a control line 53 and outputs a laser control signal 530 indicating on and off to laser 30. Laser control unit 300 is connected to galvano mirror 40 through a communication line 54 and outputs a mirror control signal 540 indicating a position of irradiation to galvano mirror 40. Galvano mirror 40 includes an X-axis scanner mirror 43, a Y-axis scanner mirror 45, and a lens 47. Light emitted from laser 30 sequentially propagates through lens 47, Y-axis scanner mirror 45, and X-axis scanner mirror 43, and is projected on XY stage 20.

An X-axis scanner motor 42 adjusts an angle of a reflection surface of X-axis scanner mirror 43, and a Y-axis scanner motor 44 adjusts an angle of a reflection surface of Y-axis scanner mirror 45. A Z-axis scanner motor 46 adjusts a distance of lens 47 relative to laser 30.

<B. Exemplary Hardware Configuration of Control System 1>

An exemplary hardware configuration of control system 1 according to the present embodiment will now be described.

Fig. 2 is a schematic diagram showing an exemplary main hardware configuration of control system 1 according to the present embodiment. As described above, control device 10 includes main control unit 100, stage control unit 200, and laser control unit 300.

Main control unit 100 includes a processor 102, a main memory 104, a storage 106, and a bus controller 112 as main components.

Storage 106 is implemented by a solid state disk (SSD) or a flash memory, and for example, a system program 108 configured to provide a basic program execution environment and an application program 110 freely created in accordance with workpiece 4 are stored therein.

Processor 102 is typically implemented by a central processing unit (CPU) or a micro-processing unit (MPU), and it implements overall control by control system 1 by reading system program 108 and application program 110 stored in storage 106 and developing the program on main memory 104 and executing the same.

Main control unit 100 is electrically connected to stage control unit 200 and laser control unit 300 through an internal bus 114. Bus controller 112 mediates data communication through internal bus 114.

Though an exemplary configuration in which necessary processing is provided by execution of a program by processor 102 is shown, a part or the entirety of this provided processing may be performed by dedicated hardware circuitry (for example, an application specific integrated circuit (ASIC) or a field-programmable gate array (FPGA)).

Stage control unit 200 generates and outputs servo command signal 510 to be provided to servo drivers 26-1 and 26-2. More specifically, stage control unit 200 includes a stage control computing unit 210 and a servo interface circuit 230.

Stage control computing unit 210 generates a command to be provided to servo drivers 26-1 and 26-2 in accordance with a computed value (command value) calculated by execution of application program 110 by main control unit 100. Stage control computing unit 210 is implemented, for example, by computing circuitry configured with a processor, an ASIC, an FPGA, or the like.

Servo interface circuit 230 outputs servo command signal 510 in accordance with a command from main control unit 100. Servo command signal 510 includes information on an amount of displacement, a speed, an angular velocity, or the like for each control of servo driver 26.

Servo interface circuit 230 obtains encoder output information 520 from each of encoders 28. Encoder output information 520 includes position data indicated by encoder 28. Encoder output information 520 may be transmitted in periodically transmitted frames.

Stage control computing unit 210 calculates a state value (a position, a speed, an acceleration, or the like) of servo driver 26 based on encoder output information 520 and outputs the state value to main control unit 100. Stage control computing unit 210 includes a clock generator 220 that generates a synchronization clock 50 for synchronization among main control unit 100, stage control unit 200, and laser control unit 300.

Stage control computing unit 210 and servo interface circuit 230 may be implemented by a single ASIC or FPGA.

Laser control unit 300 generates and outputs laser control signal 530 to be provided to laser 30 and laser control signal 530 to be provided to galvano mirror 40. More specifically, laser control unit 300 includes a laser/mirror control computing unit 310, an output interface circuit 330, and a communication interface circuit 340.

Laser/mirror control computing unit 310 generates a command to be provided to laser 30 and galvano mirror 40 in accordance with a computed value (command value) calculated by execution of application program 110 by main control unit 100. Laser/mirror control computing unit 310 is implemented, for example, by computing circuitry configured with a processor, an ASIC, an FPGA, or the like.

Laser/mirror control computing unit 310 generates laser control signal 530 and mirror control signal 540.

Output interface circuit 330 outputs laser control signal 530 to be provided to laser 30 in accordance with a command generated by laser/mirror control computing unit 310.

Communication interface circuit 340 outputs mirror control signal 540 to be provided to galvano mirror 40 in accordance with a command generated by laser/mirror control computing unit 310.

Laser/mirror control computing unit 310, output interface circuit 330, and communication interface circuit 340 may be implemented by a single ASIC or FPGA.

<C. Laser On/Off Control>

Processing for output of laser control signal 530 indicating on/off of laser 30 by control system 1 according to the present embodiment will now be described.

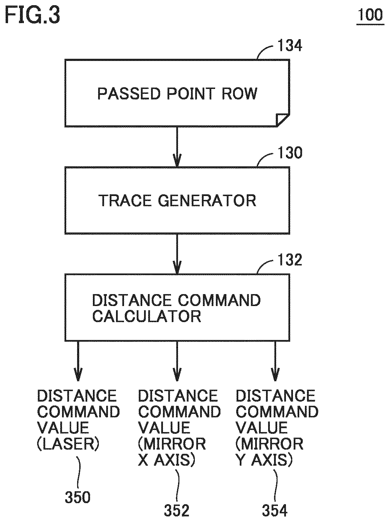

Fig. 3 is a schematic diagram showing an exemplary functional configuration of main control unit 100 of control system 1 according to the present embodiment. Main control unit 100 performs computing processing for moving a position of irradiation with laser 30 along a target trace.

More specifically, referring to Fig. 3, main control unit 100 includes a trace generator 130 and a distance command calculator 132.

Trace generator 130 generates a trace of the position of irradiation with laser 30 based on a passed point row 134 composed of one or more passed points.

Distance command calculator 132 calculates a distance command value every cycle of synchronization clock 50, in correspondence with the generated trace. The calculated distance command value includes a distance command value 350 for control of on/off or the like of laser 30 and distance command values 352 and 354 indicating the position of irradiation with laser 30. Distance command value 352 indicates the position of irradiation along an X axis (a moving distance over the X axis to the position of irradiation) and distance command value 354 indicates the position of irradiation along a Y axis (the moving distance over the Y axis to the position of irradiation). The calculated distance command value is outputted to laser control unit 300.

Though distance command value 350 is a one-dimensional value, it may be a two-dimensional value. When a two-dimensional value is used, for example, command values indicating respective moving distances over the X axis and the Y axis may be outputted, similarly to distance command values 352 and 354.

Though distance command values 352 and 354 are combined into a two-dimensional value, on the other hand, they may be a one-dimensional value similarly to distance command value 350. In this case, in addition to a one-dimensional moving distance, information indicating a direction of movement may be outputted.

Though Fig. 3 shows the functional configuration in connection with control of the position of irradiation with laser 30 for the sake of convenience of description, main control unit 100 includes also a configuration in connection with control of the position of the workpiece with the use of XY stage 20.

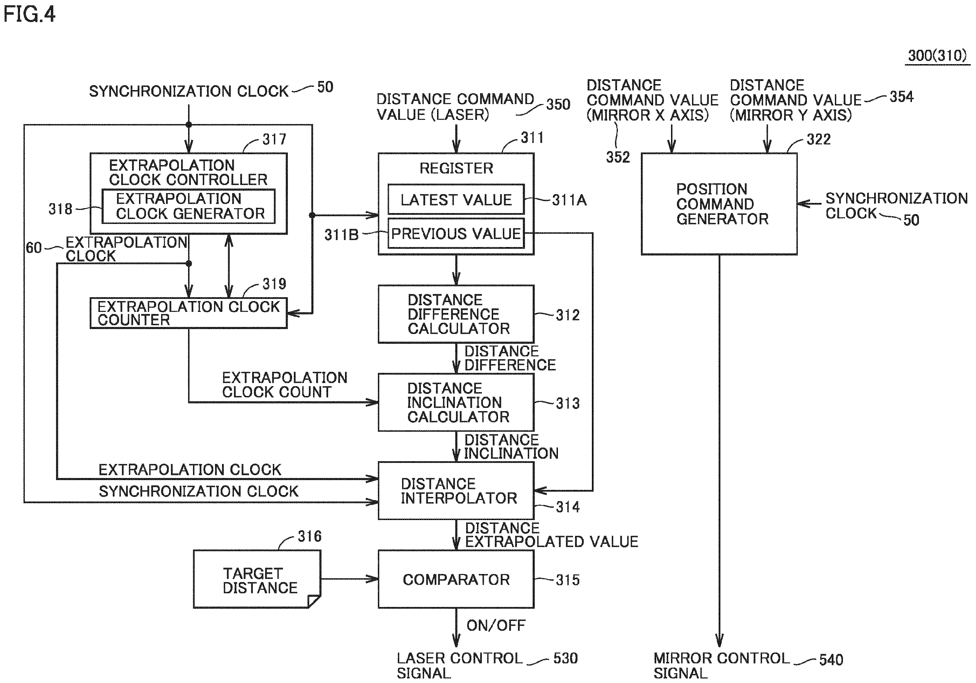

Fig. 4 is a schematic diagram showing an exemplary functional configuration of laser control unit 300 of control system 1 according to the present embodiment. Laser control unit 300 generates a command (mirror control signal 540) for the position of irradiation with laser 30 based on the distance command value from main control unit 100 and generates a command (laser control signal 530) for on/off of laser 30 by calculation (estimation) of the current distance by extrapolation.

More specifically, referring to Fig. 4, laser control unit 300 (laser/mirror control computing unit 310) includes a register 311, a distance difference calculator 312, a distance inclination calculator 313, a distance interpolator 314, a comparator 315, an extrapolation clock controller 317, an extrapolation clock counter 319, and a position command generator 322.

Register 311 is a storage that obtains new distance command value 350 from main control unit 100 at timing indicated by synchronization clock 50 (for example, fall of synchronization clock 50) and stores distance command value 350 as a latest value and stores an immediately preceding latest value as a previous value. More specifically, register 311 includes a latest value area 311A for storage of the latest value of distance command value 350 and a previous value area 311B for storage of the previous value. In storage of new distance command value 350 in latest value area 311A, a value that has been stored in latest value area 311A is written in previous value area 311B. In other words, register 311 stores at least two most recent distance command values 350.

Distance difference calculator 312 calculates a difference (distance difference) between the latest value and the previous value of distance command value 350 stored in register 311.

Distance inclination calculator 313 calculates a distance inclination based on the latest value and the previous value of distance command value 350 and the number of extrapolation clocks 60 (extrapolation clock count) within one cycle of synchronization clock 50. In other words, distance inclination calculator 313 calculates the distance inclination for one extrapolation clock by dividing the distance difference by the extrapolation clock count. By way of example, a count value obtained by count of extrapolation clock 60 may be employed as the extrapolation clock count.

Distance interpolator 314 calculates a distance extrapolated value by successively adding the distance inclination to the previous value of distance command value 350 at the timing indicated by extrapolation clock 60 (for example, rise of extrapolation clock 60). In other words, distance interpolator 314 calculates the current distance (distance extrapolated value) obtained by extrapolation, by successively adding a value calculated by multiplying the distance inclination by elapsed time to the previous value of distance command value 350 stored in register 311.

Comparator 315 outputs a command corresponding to a target distance 316 (for example, an instruction for on or off laser 30) when the calculated distance extrapolated value reaches target distance 316. Comparator 315 thus determines whether or not timing to turn on or off laser 30 has come based on comparison between the distance extrapolated value and target distance 316. Comparator 315 outputs an instruction for on or off of laser 30 as the command.

A plurality of target distances 316 such as target distance 316 for on of laser 30 and target distance 316 for off of laser 30 may be prepared. The command generated by comparator 315 is outputted as laser control signal 530 through output interface circuit 330.

Extrapolation clock controller 317 controls generation of extrapolation clock 60. More specifically, extrapolation clock controller 317 includes an extrapolation clock generator 318 that generates extrapolation clock 60, and starts/stops output of extrapolation clock 60 in accordance with timing of rise/fall or the like of synchronization clock 50.

Extrapolation clock counter 319 measures a cycle of synchronization clock 50. More specifically, extrapolation clock counter 319 counts the number of extrapolation clocks 60 generated within one cycle of synchronization clock 50. In other words, extrapolation clock counter 319 calculates a denominator for calculation of the distance inclination from the distance difference calculated by distance difference calculator 312.

Position command generator 322 generates a command (mirror control signal 540) for designation of the position of irradiation with laser 30 in accordance with the designated trace (the trace generated by trace generator 130 shown in Fig. 3). Position command generator 322 generates a command for laser 30 representing an exemplary actuator based on distance command values 352 and 354 from main control unit 100. Position command generator 322 may output the position of irradiation with laser 30 as the command. The command generated by position command generator 322 is outputted as mirror control signal 540 through communication interface circuit 340.

Position command generator 322 may perform extrapolation processing similar to that for distance command value 350 on each of distance command values 352 and 354, and then output mirror control signal 540. In other words, position command generator 322 may be provided with features similar to register 311, distance difference calculator 312, distance inclination calculator 313, distance interpolator 314, comparator 315, extrapolation clock controller 317, and extrapolation clock counter 319, for each of distance command values 352 and 354.

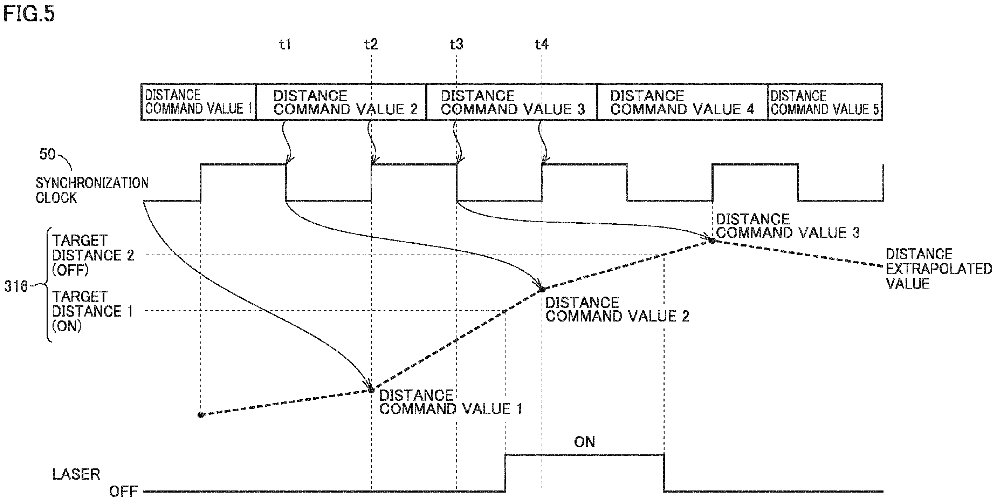

Fig. 5 is a diagram for illustrating calculation of the distance inclination and on/off control of laser in control system 1 according to the present embodiment.

Referring to Fig. 5, at timing (time t1, time t3, ...) indicated by fall of synchronization clock 50, a distance command value 1 is stored in register 311. For example, a distance command value 2 stored at time t1 means a distance over which movement should be made before time t4 which is timing indicated by rise of synchronization clock 50 two cycles ahead. Distance command value 1 stored immediately before time t1 means a distance over which movement should be made before time t2 which is timing indicated by next rise of synchronization clock 50.

Movement from distance command value 1 to distance command value 2 is made during a period from time t2 to time t4, and then linear extrapolation can be performed to calculate change (distance extrapolated value) in distance within that period. Processing for distance extrapolation is reset at every timing (time t2, time t4, ...) indicated by rise of synchronization clock 50.

The number of times of extrapolation within a period corresponds to the extrapolation clock count. In other words, the extrapolation clock count refers to an extrapolation resolution between adjacent timings.

A method of generating a command based on comparison between an estimated current distance and a target distance as described above is also referred to as a table base compare (TBC) method.

<D. Exemplary Operation and Problem That May Arise>

Exemplary operation in control system 1 according to the present embodiment and a problem that may arise will now be described.

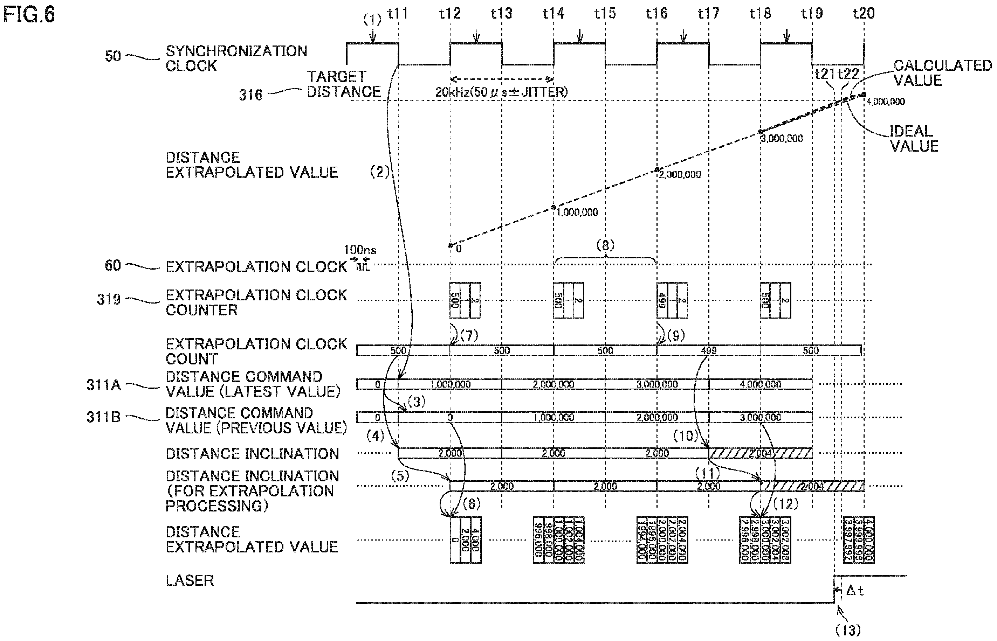

Fig. 6 is a time chart showing exemplary operation in control system 1 according to the present embodiment. Fig. 6 shows an example in which the distance command value increases in increments of 1,000,000 every one cycle of synchronization clock 50.

Referring to Fig. 6, main control unit 100 outputs the distance command value (for example, 1,000,000) ((1) in Fig. 6). Laser control unit 300 may access the distance command value outputted from main control unit 100 through internal bus 114 or main control unit 100 may write the distance command value into an internal register of laser control unit 300.

Being triggered by fall of synchronization clock 50, laser control unit 300 has the distance command value stored in latest value area 311A in register 311 ((2) in Fig. 6). Prior to storage in latest value area 311A, laser control unit 300 copies the distance command value stored in latest value area 311A to previous value area 311B ((3) in Fig. 6). Furthermore, laser control unit 300 calculates the distance inclination based on the latest value and the previous value of the distance command value and the extrapolation clock count ((4) in Fig. 6).

$$\text{Distance inclination} = (\text{amount of change in distance})/(\text{amount of change in time})$$

$$= \{(\text{latest value of distance command value}) - (\text{previous value of distance command value})\}/(\text{extrapolation clock count})$$

$$= (1{,}000{,}000 - 0)/500 = 2{,}000$$

In succession, being triggered by rise of synchronization clock 50, laser control unit 300 sets the previously calculated distance inclination for extrapolation processing ((5) in Fig. 6) and sets the previous value of the distance command value as an initial value of the distance extrapolated value ((6) in Fig. 6). Laser control unit 300 then successively updates the distance extrapolated value by incrementing the distance extrapolated value in increments of the distance inclination every extrapolation clock.

Being triggered by rise of synchronization clock 50, laser control unit 300 counts the extrapolation clock count ((7) in Fig. 6). The extrapolation clock count is successively updated at the time of rise of synchronization clock 50.

Hereafter, (1) to (7) described above are repeated.

Jitter may be caused in synchronization clock 50. Jitter caused in synchronization clock 50 may affect calculation of the distance extrapolated value. The reason why jitter affects calculation of the distance extrapolated value will be described below.

For example, it is assumed that the cycle of synchronization clock 50 has become shorter by jitter during a period from time 114 to time t16 ((8) in Fig. 6). For example, with an ideal cycle of synchronization clock 50 being defined as 50,000 [ns], it is assumed that the cycle has become shorter by 10 [ns]. On the assumption that extrapolation clock 60 has the cycle of 100 [ns], the extrapolation clock count counted by laser control unit 300 is 499 rather than ideal count of 500 ((9)) in Fig. 6).

Consequently, the distance inclination calculated by laser control unit 300 is as below ((10) in Fig. 6).

$$\text{Distance inclination} = (\text{amount of change in distance})/(\text{amount of change in time})$$

$$= \{(\text{latest value of distance command value}) - (\text{previous value of distance command value})\}/(\text{extrapolation clock count})$$

$$= (4,000,000 - 3,000,000)/499 = 2,004$$

In other words, the ideal distance inclination is 2,000, whereas it is calculated as 2,004 due to jitter in synchronization clock 50.

In succession, being triggered by rise of synchronization clock 50, laser control unit 300 sets the previously calculated distance inclination for extrapolation processing ((11) in Fig. 6), and sets the previous value of the distance command value as the initial value of the distance extrapolated value ((12) in Fig. 6).

Since the distance inclination is larger than the ideal value, the distance extrapolated value increases earlier than it ideally does. Consequently, during a period from time t18 to time t20, the distance extrapolated value exhibits a value larger than the ideal value. Then, the target distance is reached earlier and timing of on of laser becomes earlier ((13) in Fig. 6).

In the example shown in Fig. 6, laser should be turned on at time t21, whereas it is turned on at time t21' (= t21-Δt).

Jitter in synchronization clock 50 may thus cause an error in the distance extrapolated value. Then, in control system 1 according to the present embodiment, extrapolation clock counter 319 counts the extrapolation clock count so as not to cause the error in the distance extrapolated value in spite of jitter in synchronization clock 50. Count of the extrapolation clock count by extrapolation clock counter 319 will be described in detail below.

<E. Count of Extrapolation Clock Count by Extrapolation Clock Counter 319>

Count of the extrapolation clock count by extrapolation clock counter 319 will now be described. In the present embodiment, generation of extrapolation clock 60 is controlled in synchronization with synchronization clock 50.

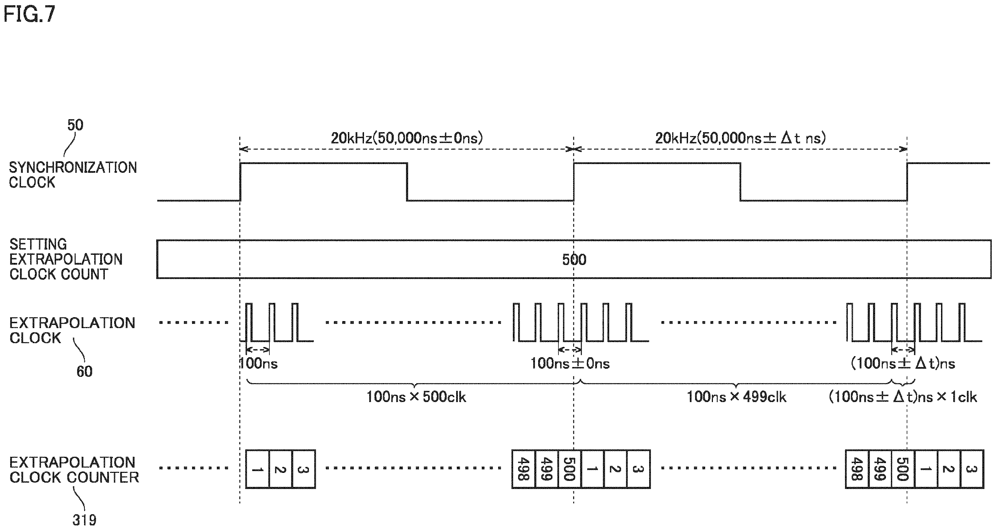

Fig. 7 is a diagram for illustrating count of the extrapolation clock count in control system 1 according to the present embodiment.

Referring to Fig. 7, the cycle of synchronization clock 50 is set to an integral multiple of the cycle of extrapolation clock 60. In the example shown in Fig. 7, the cycle of synchronization clock 50 is set to 50,000 [ns] (a frequency being set to 20 [kHz]), and the cycle of extrapolation clock 60 is set to 100 [ns]. Though the cycle of extrapolation clock 60 may be set to any cycle, it is preferably determined in consideration of resolution or the like in on/off control of laser 30.

The cycle of synchronization clock 50 may be set to any value so long as the value is the integral multiple of the cycle of extrapolation clock 60. A user may set any cycle of synchronization clock 50. For example, the cycle of synchronization clock 50 may be set within a range from 10,000 [ns] (the frequency being set to 100 [kHz]) to 100,000 [ns] (the frequency being set to 10 [kHz]).

Alternatively, the number of extrapolation clocks 60 included in one cycle of synchronization clock 50 may be set. In this case, the cycle of extrapolation clock 60 is determined by dividing the cycle of synchronization clock 50 by the set number of extrapolation clocks 60. For example, by setting the cycle of synchronization clock 50 to 50,000 [ns] and then setting the number of extrapolation clocks 60 to 500, the cycle of extrapolation clock 60 can be determined as 100 [ns].

A duty ratio of extrapolation clock 60 is set to be as low as possible so as to be able to absorb jitter that may be caused in synchronization clock 50. In the example shown in Fig. 7, the duty ratio of synchronization clock 50 is set to 10% (on period:off period = 1:9).

Being triggered by rise of synchronization clock 50, extrapolation clock controller 317 starts output of extrapolation clock 60. Thereafter, when the number of extrapolation clocks 60 generated within one cycle (from rise to next rise) of synchronization clock 50 reaches a setting value (setting extrapolation clock count) set in advance, extrapolation clock controller 317 stops output of extrapolation clock 60 until the next cycle (rise of synchronization clock 50) of synchronization clock 50 comes.

Extrapolation clock controller 317 adjust the cycle of the extrapolation clock last outputted in each cycle (the extrapolation clock that reaches the setting extrapolation clock count in each cycle) by Δt corresponding to jitter caused in synchronization clock 50.

The cycle of last outputted extrapolation clock 60 is determined depending on timing of next rise of synchronization clock 50. Specifically, extrapolation clock controller 317 starts generation of extrapolation clock 60 at timing indicated by synchronization clock 50 (for example, rise of synchronization clock 50). Therefore, the cycle of extrapolation clock 60 may automatically be adjusted depending on the timing of rise of synchronization clock 50.

By thus suppressing variation in clock count of counted extrapolation clock 60 by adjusting output of extrapolation clock 60 in synchronization with cyclic timing of synchronization clock 50 (for example, rise of synchronization clock 50), an error that may be caused in distance extrapolated value is suppressed and possibility of fluctuation in timing of on/off of laser 30 is lowered.

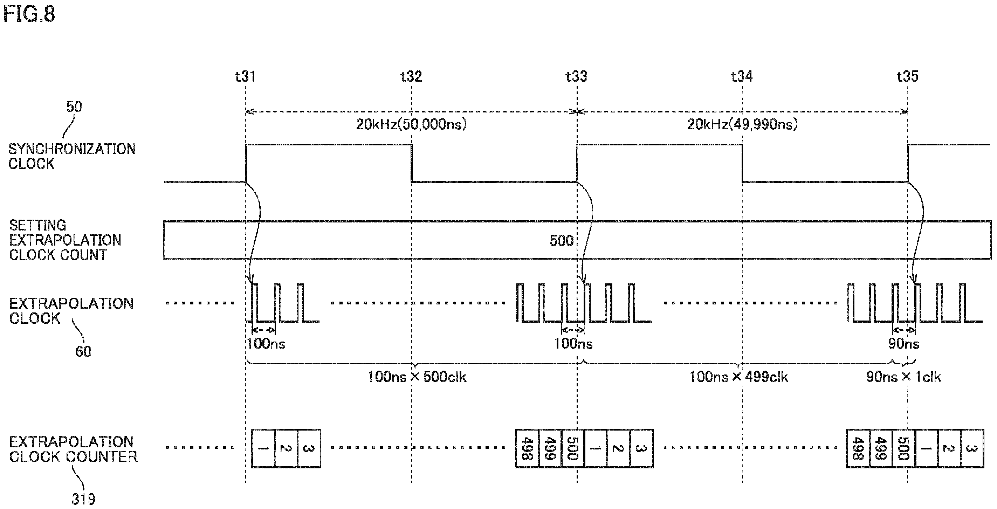

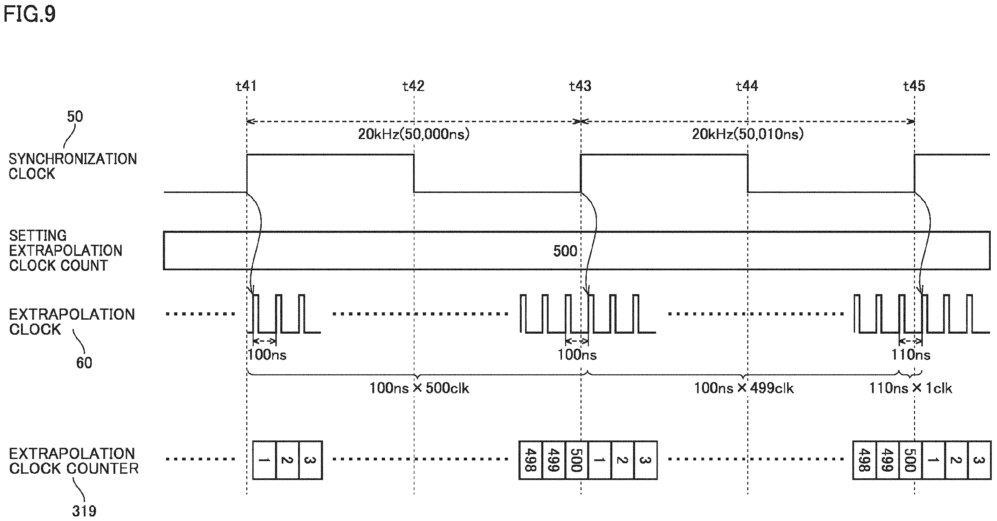

Fig. 8 is a time chart showing exemplary operation when the cycle of synchronization clock 50 becomes shorter in control system 1 according to the present embodiment. It is assumed in Figs. 8 and 9 that extrapolation clock 60 has the cycle of 100 [ns] and the duty ratio of 10% (on period:off period = 1:9).

Referring to Fig. 8, being triggered by rise of synchronization clock 50, output of extrapolation clock 60 is started (time t31, time t33, and time t35). In addition, being triggered by rise of synchronization clock 50, extrapolation clock counter 319 resets the count value (the extrapolation clock count) and successively increments the count value in accordance with the number of outputted extrapolation clocks 60.

As described above, being triggered by rise of synchronization clock 50, the distance inclination is calculated, and being triggered by rise of synchronization clock 50, calculation of the distance extrapolated value is started based on the calculated distance inclination. When the calculated distance extrapolated value reaches target distance 316, the command for on or off of laser is outputted.

Extrapolation clock counter 319 determines whether or not the number of extrapolation clocks 60 that had been outputted since immediately preceding rise of synchronization clock 50 has reached the setting extrapolation clock count set in advance, and when the number has not reached the setting extrapolation clock count, extrapolation clock generator 318 keeps outputting extrapolation clock 60.

When synchronization clock 50 rises at time t33, extrapolation clock controller 317 resets synchronization clock 50 and has extrapolation clock generator 318 start output of extrapolation clock 60.

Similar processing is performed also during a period from time t33 to time t35. From time t33 to time t35, the cycle of synchronization clock 50 is shorter by 10 [ns].

When synchronization clock 50 rises at time t35, extrapolation clock controller 317 resets synchronization clock 50 and has extrapolation clock generator 318 start output of extrapolation clock 60. The cycle of synchronization clock 50, however, has become shorter, and hence the cycle of extrapolation clock 60 outputted immediately before time t35 is adjusted from ideal 100 [ns] to 90 [ns].

Fig. 9 is a time chart showing exemplary operation when the cycle of synchronization clock 50 becomes longer in control system 1 according to the present embodiment.

Referring to Fig. 9, being triggered by rise of synchronization clock 50, output of extrapolation clock 60 is started (time t41, time t43, and time t45). By being triggered by rise of synchronization clock 50, extrapolation clock counter 319 is reset and successively incremented in accordance with the number of outputted extrapolation clocks 60.

As described above, being triggered by rise of synchronization clock 50, the distance inclination is calculated, and being triggered by rise of synchronization clock 50, calculation of the distance extrapolated value is started based on the calculated distance inclination. When the calculated distance extrapolated value then reaches target distance 316, the command for on or off of laser is outputted.

Extrapolation clock controller 317 determines whether or not the number of extrapolation clocks 60 that had been outputted since immediately preceding rise of synchronization clock 50 has reached the setting extrapolation clock count set in advance, and when the number has not reached the setting extrapolation clock count, it has extrapolation clock generator 318 continue output of extrapolation clock 60.

When synchronization clock 50 rises at time t43, extrapolation clock controller 317 resets synchronization clock 50 and has extrapolation clock generator 318 start output of extrapolation clock 60.

Similar processing is performed also during a period from time t43 to time t45. From time t43 to time t45, however, the cycle of synchronization clock 50 is longer by 10 [ns]. Therefore, after output of last synchronization clock 50 and before rise (time t45) of synchronization clock 50, there is a time period (110 [ns]) longer than the cycle (100 [ns]) of synchronization clock 50. When last synchronization clock 50 is outputted, that is, when the number of outputted extrapolation clocks 60 reaches the setting extrapolation clock count set in advance, output of synchronization clock 50 is stopped. Consequently, the extrapolation clock count counted during the period from time t43 to time t45 is maintained at 500 as many as the setting extrapolation clock count.

When synchronization clock 50 then rises at time t45, extrapolation clock controller 317 resets synchronization clock 50 and has extrapolation clock generator 318 start output of extrapolation clock 60. Consequently, the cycle of extrapolation clock 60 outputted immediately before time t45 is adjusted from ideal 100 [ns] to 110 [ns].

<F. Processing Procedure>

A procedure in processing performed by laser control unit 300 of control system 1 according to the present embodiment will now be described.

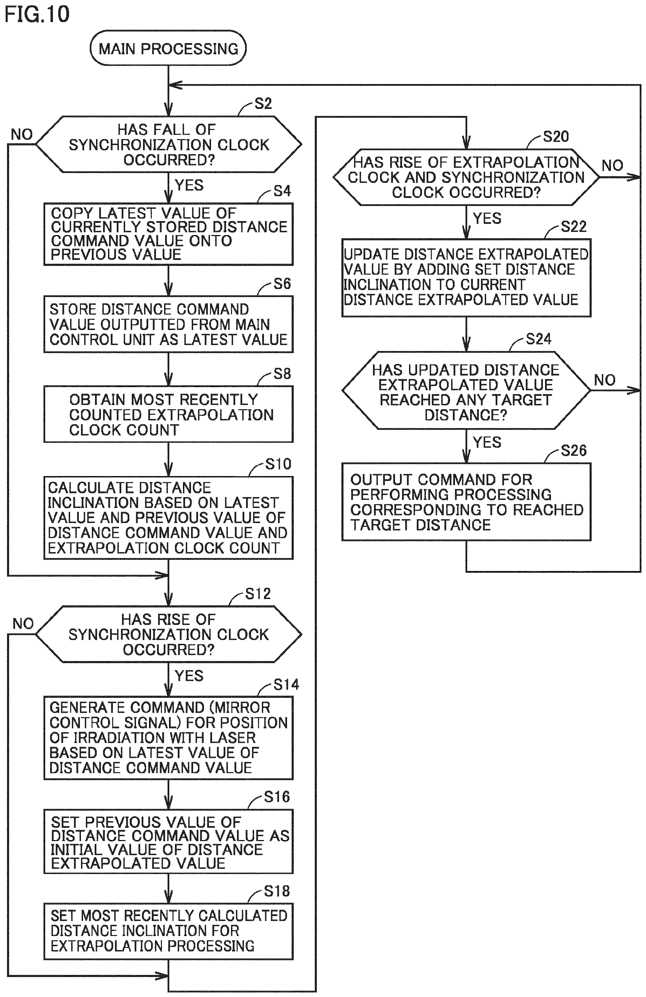

Fig. 10 is a flowchart showing a processing procedure in main processing performed by laser control unit 300 of control system 1 according to the present embodiment. The main processing is processing for controlling laser 30 and galvano mirror 40 which are actuators.

Referring to Fig. 10, laser control unit 300 determines whether or not fall of synchronization clock 50 has occurred (step S2). When fall of synchronization clock 50 has occurred (YES in step S2), laser control unit 300 obtains the new distance command value and has the distance command value stored as the latest value and has the immediately preceding latest value stored as the previous value. More specifically, laser control unit 300 copies the latest value of the currently stored distance command value onto the previous value (step S4), and has the distance command value outputted from main control unit 100 stored as the latest value (step S6). Laser control unit 300 then obtains the most recently counted extrapolation clock count (step S8) and calculates the distance inclination based on the latest value and the previous value of the distance command value and the extrapolation clock count (step S10). The most recently counted extrapolation clock count means a value stored in extrapolation clock counter 319 at the timing in step S8.

When fall of synchronization clock 50 has not occurred (NO in step S2), processing in steps S4 to S10 is skipped.

In succession, laser control unit 300 determines whether or not rise of synchronization clock 50 has occurred (step S12). When rise of synchronization clock 50 has occurred (YES in step S12), the command for the position of irradiation with laser 30 (mirror control signal 540) is generated based on the latest value of the distance command value (step S14).

Laser control unit 300 sets the previous value of the distance command value as the initial value of the distance extrapolated value (step S16) and sets the most recently calculated distance inclination for extrapolation processing (step S18).

When rise of synchronization clock 50 has not occurred (NO in step S12), processing in steps S16 and S18 is skipped.

In succession, laser control unit 300 determines whether or not rise of synchronization clock 50 has occurred (step S20). When rise of synchronization clock 50 has occurred (YES in step S20), laser control unit 300 updates the distance extrapolated value by adding the set distance inclination to the current distance extrapolated value (step S22). In other words, laser control unit 300 calculates the distance extrapolated value by successively adding the distance inclination to the previous value of the distance command value at prescribed timing indicated by synchronization clock 50.

In succession, laser control unit 300 determines whether or not the updated distance extrapolated value has reached any target distance 316 (step S24). When the updated distance extrapolated value has reached any target distance 316 (YES in step S24), laser control unit 300 outputs the command for performing processing (on or off of laser 30) corresponding to reached target distance 316 (step S26). Laser control unit 300 thus outputs the command corresponding to target distance 316 when the distance extrapolated value reaches target distance 316. Processing in step S2 or later is then repeated.

When the updated distance extrapolated value has not reached any target distance (NO in step S24), processing in step S26 is skipped.

When rise of synchronization clock 50 has not occurred (NO in step S20), laser control unit 300 repeats the processing in step S2 or later.

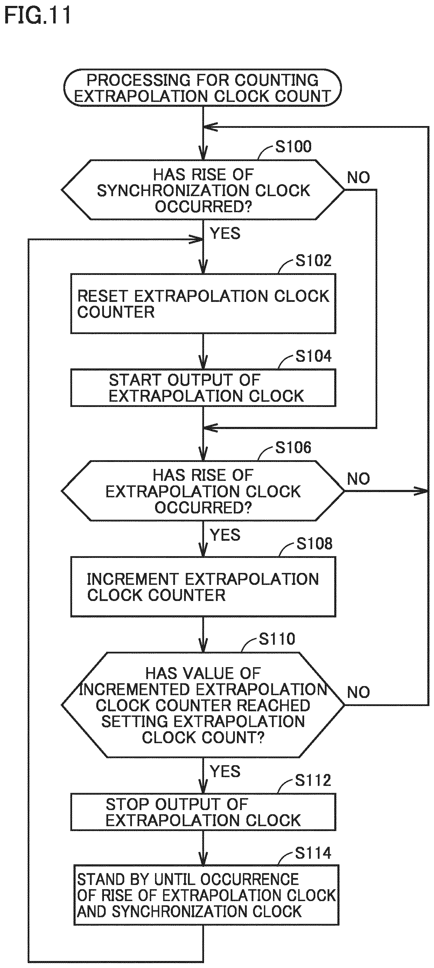

Fig. 11 is a flowchart showing a processing procedure in processing for counting the extrapolation clock count performed by laser control unit 300 of control system 1 according to the present embodiment. As shown in Fig. 11, laser control unit 300 counts the number of extrapolation clocks 60 generated within one cycle of synchronization clock 50. Processing shown in Fig. 11 may be performed in parallel to the main processing shown in Fig. 10 or may be performed as being integrated with the main processing.

Referring to Fig. 11, laser control unit 300 determines whether or not rise of synchronization clock 50 has occurred (step S100). When rise of synchronization clock 50 has occurred (YES in step S100), laser control unit 300 resets extrapolation clock counter 319 (step S102) and starts output of extrapolation clock 60 (step S104).

When rise of synchronization clock 50 has not occurred (NO in step S100), processing in steps S102 and S104 is skipped.

Laser control unit 300 determines whether or not rise of extrapolation clock 60 has occurred (step S106). When rise of extrapolation clock 60 has not occurred (NO in step S106), processing in step S100 or later is repeated.

When rise of extrapolation clock 60 has occurred (YES in step S106), laser control unit 300 increments extrapolation clock counter 319 (step S108).

Laser control unit 300 then determines whether or not a value of incremented extrapolation clock counter 319 has reached the setting extrapolation clock count (step S110). When the value of incremented extrapolation clock counter 319 has reached the setting extrapolation clock count (YES in step S110), laser control unit 300 stops output of extrapolation clock 60 (step S112). When the number of extrapolation clocks 60 generated within one cycle of synchronization clock 50 has thus reached the predetermined setting value, laser control unit 300 stops output of extrapolation clock 60 until the next cycle of synchronization clock 50 comes. Laser control unit 300 then stands by until occurrence of rise of synchronization clock 50 (step S1 14). When rise of synchronization clock 50 occurs, the processing in step S102 or later is repeated.

When the value of incremented extrapolation clock counter 319 has not reached the setting extrapolation clock count (NO in step S110), processing in step S100 or later is repeated.

Timing of irradiation with laser 30 can precisely be controlled through the process above.

<G. User Interface>

An exemplary user interface provided by control system 1 according to the present embodiment will now be described. Typically, the user inputs setting for performing the processing as described above through operation display device 400 connected to control device 10.

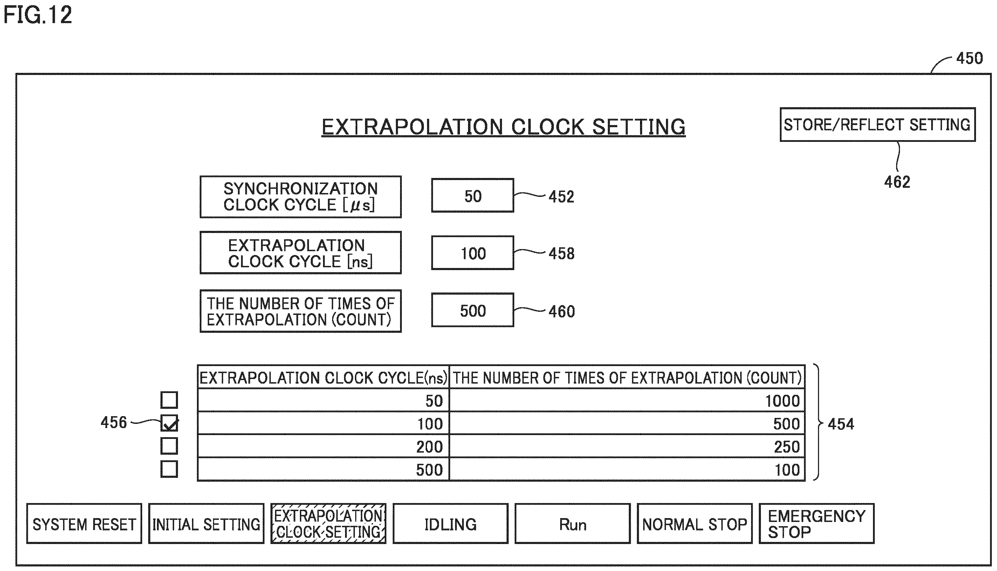

Fig. 12 is a schematic diagram showing an exemplary user interface screen 450 shown on operation display device 400 of control system 1 according to the present embodiment. Referring to Fig. 12, user interface screen 450 accepts setting necessary for the processing as described above.

User interface screen 450 includes an input portion 452 where setting of the cycle of synchronization clock 50 is accepted, a setting candidate list display portion 454, a check box 456, a display portion 458 where the cycle of extrapolation clock 60 is shown, a display portion 460 where the number of times of extrapolation is shown, and a setting reflection button 462.

The user inputs the cycle of synchronization clock 50 into input portion 452. Operation display device 400 shows a set of the cycle of extrapolation clock 60 that can be set and the number of times of extrapolation in setting candidate list display portion 454 in accordance with the cycle of synchronization clock 50 inputted to input portion 452.

The set of the cycle of extrapolation clock 60 and the number of times of extrapolation may be shown with reference to setting made in advance in main control unit 100.

The user checks check box 456 corresponding to a desired set, among the sets of the cycle of extrapolation clock 60 and the number of times of extrapolation shown in setting candidate list display portion 454. Operation display device 400 shows the checked set of the cycle of extrapolation clock 60 and the number of times of extrapolation in display portion 458 and display portion 460.

The user determines the cycle of extrapolation clock 60 so as to maximize the number of times of extrapolation in the set cycle of synchronization clock 50, in consideration of tradeoff between resistance against jitter that may be caused in synchronization clock 50 and precision of control of on/off of laser 30.

For example, when synchronization clock 50 has the cycle of 50 [$\mu$s] (the frequency being set to 20 [kHz]), extrapolation clock 60 has a minimum cycle of 50 [ns]. When synchronization clock 50 has the cycle of 1 [ms] (the frequency being set to 1 [kHz]), on the other hand, extrapolation clock 60 has the minimum cycle of 100 [ns].

When the user finally selects setting reflection button 462, shown contents of setting are transmitted to control device 10.

As set forth above, the user sets the cycle of synchronization clock 50, the cycle of extrapolation clock 60, and the number of times of extrapolation in consideration of resistance against jitter that may be caused in synchronization clock 50 and precision of on/off control of laser 30. Control device 10 thus provides the user interface to accept setting of the cycle of synchronization clock 50 and the cycle of extrapolation clock 60.

<H. Modification>

Though the example in which a value (count value) obtained by actual count of extrapolation clock 60 is adopted as the number of extrapolation clocks 60 (the extrapolation clock count) within one cycle of synchronization clock 50 is shown in the description above, a predetermined fixed value (setting value) may be employed. In other words, the number of extrapolation clocks 60 within one cycle of synchronization clock 50 may be a predetermined fixed value.

For example, on the assumption that synchronization clock 50 has the cycle of 50,000 [ns] and extrapolation clock 60 has the cycle of 100 [ns], the number of extrapolation clocks 60 (the extrapolation clock count) within one cycle of synchronization clock 50 can be set to 500.

By thus using the predetermined fixed value as the extrapolation clock count, operation can be verified more readily than in an example where the count value is used.

<I. Additional Aspects>

The present embodiment as described above encompasses technical concepts as below.

[Configuration 1]

A control device (10) for controlling an actuator (30, 40) includes a storage (311) configured to obtain a new distance command value at first timing indicated by a first clock (50) and store the distance command value as a latest value and store an immediately preceding latest value as a previous value, a second clock generator (318) configured to generate a second clock (60), a first calculator (313) configured to calculate a distance inclination based on the latest value and the previous value of the distance command value and the number of second clocks within one cycle of the first clock, a second calculator (314) configured to calculate a distance extrapolated value by successively adding the distance inclination to the previous value of the distance command value at second timing indicated by the second clock, a first command generator (315) configured to output a first command (530) corresponding to a target distance (316) when the distance extrapolated value reaches the target distance, and a clock controller (317) configured to stop output of the second clock until a next cycle of the first clock comes when the number of second clocks generated within one cycle of the first clock reaches a predetermined setting value.

[Configuration 2]

The control device according to Configuration 1 further includes a counter configured to count the number of second clocks generated within one cycle of the first clock.

[Configuration 3]

In the control device according to Configuration 1, the number of second clocks generated within one cycle of the first clock is a predetermined fixed value.

[Configuration 4]

In the control device according to any one of Configurations 1 to 3, the cycle of the first clock is set to an integral multiple of a cycle of the second clock.

[Configuration 5]

In the control device according to any one of Configurations 1 to 4, the clock controller is configured to start generation of the second clock at third timing indicated by the first clock.

[Configuration 6]

The control device according to any one of Configurations 1 to 5 further includes a second command generator (322) configured to generate a second command (540) for designation of a position in accordance with a designated trace.

[Configuration 7]

In the control device according to any one of Configurations 1 to 6, the second command generator is configured to output an on or off instruction as a command.

[Configuration 8]

In the control device according to any one of Configurations 1 to 7, the control device is configured to provide a user interface (450) for accepting setting of a cycle of the first clock and a cycle of the second clock.

[Configuration 9]

A control system includes an actuator (30, 40) and a control device (10) configured to control the actuator, and the control device includes a storage (311) configured to obtain a new distance command value at first timing indicated by a first clock (50) and store the distance command value as a latest value and store an immediately preceding latest value as a previous value, a second clock generator (318) configured to generate a second clock (60), a first calculator (313) configured to calculate a distance inclination based on the latest value and the previous value of the distance command value and the number of second clocks within one cycle of the first clock, a second calculator (314) configured to calculate a distance extrapolated value by successively adding the distance inclination to the previous value of the distance command value at second timing indicated by the second clock, a command generator (315) configured to output a command corresponding to a target distance (316) when the distance extrapolated value reaches the target distance, and a clock controller (317) configured to stop output of the second clock until a next cycle of the first clock comes when the number of second clocks generated within one cycle of the first clock reaches a predetermined setting value.

[Configuration 10]

A method of controlling an actuator (30, 40) includes obtaining a new distance command value at first timing indicated by a first clock (50) and storing the distance command value as a latest value and storing an immediately preceding latest value as a previous value (S4, S6), calculating a distance inclination based on the latest value and the previous value of the distance command value and the number of second clocks within one cycle of the first clock (S10), calculating a distance extrapolated value by successively adding the distance inclination to the previous value of the distance command value at second timing indicated by the second clock (S22), outputting a command corresponding to a target distance when the distance extrapolated value reaches the target distance (S24, S26), and stopping output of the second clock until a next cycle of the first clock comes when the number of second clocks generated within one cycle of the first clock reaches a predetermined setting value (S112).

<J. Advantage>

According to control system 1 according to the present embodiment, whether or not the target distance has been reached can more precisely be determined by extrapolating the distance command value updated in cycles of the synchronization clock with a cycle shorter than the synchronization clock. Even when jitter is caused in the synchronization clock, such an algorithm as not affecting the number of extrapolation clocks generated within the synchronization clock is adopted so that the calculated distance extrapolated value can be prevented from being affected by jitter. More precise control can thus be carried out in a stable manner.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

REFERENCE SIGNS LIST

1 control system; 4 workpiece; 10 control device; 20 XY stage; 22 plate; 24 servo motor; 26 servo driver; 28 encoder; 30 laser; 40 galvano mirror; 42 X-axis scanner motor; 43 axis scanner mirror; 44 Y-axis scanner motor; 45 Y-axis scanner mirror; 46 Z-axis scanner motor; 47 lens; 50 synchronization clock; 51, 52, 53 control line; 54 communication line; 60 extrapolation clock; 100 main control unit; 102 processor; 104 main memory; 106 storage; 108 system program; 110 application program; 112 bus controller; 114 internal bus; 130 trace generator; 132 distance command calculator; 134 passed point row; 200 stage control unit; 210 stage control computing unit; 220 clock generator; 230 servo interface circuit; 300 laser control unit; 310 laser/mirror control computing unit; 311 register; 311A latest value area; 311B previous value area; 312 distance difference calculator; 313 distance inclination calculator; 314 distance interpolator; 315 comparator; 316 target distance; 317 extrapolation clock controller; 318 extrapolation clock generator; 319 extrapolation clock counter; 322 position command generator; 330 output interface circuit; 340 communication interface circuit; 350, 352, 354 distance command value; 400 operation display device; 450 user interface screen; 452 input portion; 454 setting candidate list display portion; 456 check box; 458, 460 display portion; 462 setting reflection button; 510 servo command signal; 520 encoder output information; 530 laser control signal; 540 mirror control signal.

**Claims**

1.  A control device for controlling an actuator, the control device comprising:

    a storage configured to obtain new distance command value at first timing indicated by a first clock and store the distance command value as a latest value and store an immediately preceding latest value as a previous value;
    a second clock generator configured to generate a second clock;
    a first calculator configured to calculate a distance inclination based on the latest value and the previous value of the distance command value and the number of second clocks within one cycle of the first clock;
a second calculator configured to calculate a distance extrapolated value by successively adding the distance inclination to the previous value of the distance command value at second timing indicated by the second clock;
a first command generator configured to output a first command corresponding to a target distance when the distance extrapolated value reaches the target distance; and
a clock controller configured to stop output of the second clock until a next cycle of the first clock comes when the number of second clocks generated within one cycle of the first clock reaches a predetermined setting value.

2. The control device according to claim 1, further comprising a counter configured to count the number of second clocks generated within one cycle of the first clock.

3. The control device according to claim 1 or 2, wherein
the number of second clocks generated within one cycle of the first clock is a predetermined fixed value.

4. The control device according to any one of claims 1 to 3, wherein
a cycle of the first clock is set to an integral multiple of a cycle of the second clock.

5. The control device according to any one of claims 1 to 4, wherein
the clock controller is configured to start generation of the second clock at third timing indicated by the first clock.

6. The control device according to any one of claims 1 to 5, further comprising a second command generator configured to generate a second command for designation of a position in accordance with a designated trace.

7. The control device according to any one of claims 1 to 6, wherein
the first command generator is configured to output an on or off instruction as a command.

8. The control device according to any one of claims 1 to 7, wherein
the control device is configured to provide a user interface for accepting setting of a cycle of the first clock and a cycle of the second clock.

9. A control system comprising:

an actuator; and
a control device configured to control the actuator, wherein
the control device comprises

a storage configured to obtain a new distance command value at first timing indicated by a first clock and store the distance command value as a latest value and store an immediately preceding latest value as a previous value,
a second clock generator configured to generate a second clock,
a first calculator configured to calculate a distance inclination based on the latest value and the previous value of the distance command value and the number of second clocks within one cycle of the first clock,
a second calculator configured to calculate a distance extrapolated value by successively adding the distance inclination to the previous value of the distance command value at second timing indicated by the second clock,
a command generator configured to output a command corresponding to a target distance when the distance extrapolated value reaches the target distance, and
a clock controller configured to stop output of the second clock until a next cycle of the first clock comes when the number of second clocks generated within one cycle of the first clock reaches a predetermined setting value.

10. A method of controlling an actuator, the method comprising:

obtaining a new distance command value at first timing indicated by a first clock and storing the distance command value as a latest value and storing an immediately preceding latest value as a previous value;
calculating a distance inclination based on the latest value and the previous value of the distance command value and the number of second clocks within one cycle of the first clock;
calculating a distance extrapolated value by successively adding the distance inclination to the previous value of the distance command value at second timing indicated by the second clock;
outputting a command corresponding to a target distance when the distance extrapolated value reaches the target distance; and
stopping output of the second clock until a next cycle of the first clock comes when the number of second clocks generated within one cycle of the first clock reaches a predetermined setting value.

FIG.1

MIRROR CONTROL SIGNAL

540

54

LASER CONTROL SIGNAL

530

53

SERVO COMMAND SIGNAL

510

51

ENCODER OUTPUT INFORMATION

520

52

WORKPIECE

FIG.2

EP 4 506 772 A1

FIG.3                                           100

```
                                    ┌─ 134
        ┌──────────────────────────────┐
        │     PASSED POINT ROW         │
        └──────────────────────────────┘
                        │
                        ▼           ┌─ 130
        ┌──────────────────────────────┐
        │      TRACE GENERATOR         │
        └──────────────────────────────┘
                        │
                        ▼           ┌─ 132
        ┌──────────────────────────────┐
        │   DISTANCE COMMAND           │
        │   CALCULATOR                 │
        └──────────────────────────────┘
          │              │            │
          ▼              ▼            ▼
     DISTANCE       DISTANCE      DISTANCE
     COMMAND        COMMAND       COMMAND
     VALUE          VALUE         VALUE
     (LASER)        (MIRROR       (MIRROR
                    X AXIS)       Y AXIS)

       350            352           354
```

**FIG.4**

EP 4 506 772 A1

FIG.5

FIG.6

FIG.7

EP 4 506 772 A1

FIG.8

SYNCHRONIZATION CLOCK 50

SETTING EXTRAPOLATION CLOCK COUNT

EXTRAPOLATION CLOCK 60

EXTRAPOLATION CLOCK COUNTER 319

t31   t32   t33   t34   t35

20kHz(50,000ns)   20kHz(49,990ns)

500

100ns   100ns   90ns

100ns × 500clk   100ns × 499clk   90ns × 1clk

1 2 3   498 499 500 1 2 3   498 499 500 1 2 3

EP 4 506 772 A1

FIG.9

EP 4 506 772 A1

## FIG.10

MAIN PROCESSING

**S2**
HAS FALL OF
SYNCHRONIZATION CLOCK
OCCURRED? — NO

↓ YES

**S4**
COPY LATEST VALUE OF
CURRENTLY STORED DISTANCE
COMMAND VALUE ONTO
PREVIOUS VALUE

**S6**
STORE DISTANCE COMMAND
VALUE OUTPUTTED FROM MAIN
CONTROL UNIT AS LATEST VALUE

**S8**
OBTAIN MOST RECENTLY
COUNTED EXTRAPOLATION
CLOCK COUNT

**S10**
CALCULATE DISTANCE
INCLINATION BASED ON LATEST
VALUE AND PREVIOUS VALUE OF
DISTANCE COMMAND VALUE AND
EXTRAPOLATION CLOCK COUNT

**S12**
HAS RISE OF
SYNCHRONIZATION CLOCK
OCCURRED? — NO

↓ YES

**S14**
GENERATE COMMAND (MIRROR
CONTROL SIGNAL) FOR POSITION
OF IRRADIATION WITH LASER
BASED ON LATEST VALUE OF
DISTANCE COMMAND VALUE

**S16**
SET PREVIOUS VALUE OF
DISTANCE COMMAND VALUE AS
INITIAL VALUE OF DISTANCE
EXTRAPOLATED VALUE

**S18**
SET MOST RECENTLY CALCULATED
DISTANCE INCLINATION FOR
EXTRAPOLATION PROCESSING

**S20**
HAS RISE OF EXTRAPOLATION
CLOCK AND SYNCHRONIZATION
CLOCK OCCURRED? — NO

↓ YES

**S22**
UPDATE DISTANCE EXTRAPOLATED
VALUE BY ADDING SET DISTANCE
INCLINATION TO CURRENT
DISTANCE EXTRAPOLATED VALUE

**S24**
HAS UPDATED DISTANCE
EXTRAPOLATED VALUE
REACHED ANY TARGET
DISTANCE? — NO

↓ YES

**S26**
OUTPUT COMMAND FOR
PERFORMING PROCESSING
CORRESPONDING TO REACHED
TARGET DISTANCE

25

# FIG.11

```
    ┌─────────────────────────────────┐
    │ PROCESSING FOR COUNTING         │
    │ EXTRAPOLATION CLOCK COUNT       │
    └─────────────────────────────────┘
```

S100

HAS RISE OF
SYNCHRONIZATION CLOCK
OCCURRED? — NO

YES

S102

RESET EXTRAPOLATION CLOCK
COUNTER

S104

START OUTPUT OF
EXTRAPOLATION CLOCK

S106

HAS RISE OF
EXTRAPOLATION CLOCK
OCCURRED? — NO

YES

S108

INCREMENT EXTRAPOLATION
CLOCK COUNTER

S110

HAS VALUE OF
INCREMENTED EXTRAPOLATION
CLOCK COUNTER REACHED
SETTING EXTRAPOLATION
CLOCK COUNT? — NO

YES

S112

STOP OUTPUT OF
EXTRAPOLATION CLOCK

S114

STAND BY UNTIL OCCURRENCE
OF RISE OF EXTRAPOLATION CLOCK
AND SYNCHRONIZATION CLOCK

FIG.12

EXTRAPOLATION CLOCK SETTING

STORE/REFLECT SETTING ~462

450

| SYNCHRONIZATION CLOCK CYCLE [μs] | 50 ~452 |

| EXTRAPOLATION CLOCK CYCLE [ns] | 100 ~458 |

| THE NUMBER OF TIMES OF EXTRAPOLATION (COUNT) | 500 ~460 |

| | EXTRAPOLATION CLOCK CYCLE(ns) | THE NUMBER OF TIMES OF EXTRAPOLATION (COUNT) |
|---|---|---|
| ☐ | 50 | 1000 |
| ☑ (456) | 100 | 500 |
| ☐ | 200 | 250 |
| ☐ | 500 | 100 |

454

| SYSTEM RESET | INITIAL SETTING | EXTRAPOLATION CLOCK SETTING | IDLING | Run | NORMAL STOP | EMERGENCY STOP |

EP 4 506 772 A1

## INTERNATIONAL SEARCH REPORT

International application No.

**PCT/JP2023/008836**

### A. CLASSIFICATION OF SUBJECT MATTER

*G05D 3/12*(2006.01)i
FI:  G05D3/12 305B

According to International Patent Classification (IPC) or to both national classification and IPC

### B. FIELDS SEARCHED

Minimum documentation searched (classification system followed by classification symbols)

G05D3/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-38034 A (CANON INC.) 14 March 2019 (2019-03-14) paragraphs [0010]-[0080] | 1-10 |
| A | JP 61-249105 A (YASKAWA ELECTRIC CORP.) 06 November 1986 (1986-11-06) entire text | 1-10 |

☐ Further documents are listed in the continuation of Box C.      ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

28

| INTERNATIONAL SEARCH REPORT | | International application No. |
| Information on patent family members | | |
| | | PCT/JP2023/008836 |

| Patent document cited in search report | Publication date (day/month/year) | Patent family member(s) | Publication date (day/month/year) |
|---|---|---|---|
| JP 2019-38034 A | 14 March 2019 | US 2019/0061054 A1 paragraphs [0061]-[0131] CN 109420845 A | |
| JP 61-249105 A | 06 November 1986 | (Family: none) | |

Form PCT/ISA/210 (patent family annex) (January 2015)

## REFERENCES CITED IN THE DESCRIPTION

**Patent documents cited in the description**

- JP 2063692 A